# FASCICULE DE BREVET EUROPEEN

(11) **EP 2 644 045 B1**
(45) Date de publication et mention de la délivrance du brevet: **20.05.2015**
(21) Numéro de dépôt: 13171153.3
(22) Date de dépôt: 07.06.2013
(51) Int. Cl.: A41D 19/015, B62D 1/06, B62J 33/00, B62K 21/26, H05B 3/40

(54) **Dispositif permettant de détecter, de contrôler et d'alimenter en énergie électrique des équipements individuels chauffants**
Geräte zu erkennen, zu steuern und liefern elektrische Energie zur Erwärmung einzelner Geräte
Device to detect, control and supply electrical energy to the heating individual equipment

(30) Priorité: 21.06.2012 FR 1201764
(43) Date de publication de la demande: 02.10.2013
(73) Titulaire: Corpa de la Fuente, Rene, 83400 Hyeres (FR)
(72) Inventeur: Corpa de la Fuente, Rene, 83400 Hyeres (FR)

(56) Documents cités:
- EP-A1- 1 285 849
- WO-A2-2005/042306
- CN-U- 201 499 655
- CN-U- 201 932 289
- CN-Y- 201 119 439
- DE-A1- 3 344 582
- US-A- 1 011 574
- US-A1- 2008 229 476

## Description

### Domaine de l'invention

La présente invention concerne un dispositif qui permet la détection, la régulation, la protection et l'alimentation en énergie électrique d'équipements individuels chauffants uniquement par contact entre les poignées et les gants. Ce dispositif se monte sur les véhicules motorisés à conduite extérieure.

### Contexte de l'invention

L'état actuel de la technique comprend des équipements individuels chauffants proposés sur le marché pour les utilisateurs de véhicules à conduite extérieure. Ces équipements sont alimentés soit par un système autonome avec des batteries rechargeables, soit par une liaison électrique filaire qui relie par l'intermédiaire de connecteurs l'utilisateur au véhicule porteur.

Les documents DE 33 44 582 A1 et EP 1 285 849 A1 présente des poignées chauffantes. Ce dispositif permet de chauffer la poignée saisie par l'utilisateur et de ce fait chauffer uniquement les parties intérieures de la main les moins exposées au froid.

Le document CN 201 932 289 U présente des gants chauffants alimentés en électricité par un générateur entrainé par la chaine d'une bicyclette. Ce dispositif impose la liaison filaire entre le générateur et les gants.

Le document CN 201119439 Y présente un dispositif de liaison électrique, repris par le préambule de la revendication 1, réalisé par l'intermédiaire de deux contacts situés dans la partie intérieure du gant entre le pouce et l'index et de deux bandes métalliques connectées aux fils d'alimentation électrique. Ces deux bandes métalliques sont reliées entre elles par un isolant élastique. L'ensemble vient se fixé autour du guidon de façon amovible. Le concept de ce système impose une position bien déterminée de la main de l'utilisateur pour assurer la connexion électrique. De même dés qu'il est en fonction, l'ensemble est alimenté en permanence en courant et ne protège par l'utilisateur des risques électriques.

La présente invention est conçue et réalisée pour surmonter ces défauts.

### Résumé de l'invention

Pour résoudre les problèmes liés à l'autonomie des batteries, à la suppression de toute liaison filaire entre l'utilisateur et le véhicule et l'obligation de garder une position précise de la main de l'utilisateur pour maintenir la connexion électrique, le projet se compose :
De deux gants qui en plus d'assurer la fonction de chauffage des mains, ils assurent la fonction réception du courant par l'intermédiaire de contacts conducteurs électriques disposés dans leurs faces internes. Ces contacts sont reliés à l'élément chauffant par l'intermédiaire d'un dispositif électronique permettant au système de détecter leurs connexions.
Deux poignées qui se montent par échange standard à la place de celle du véhicule devant recevoir ce dispositif. Elles sont équipées de deux bagues en matière conductrice à l'électricité. Elles assurent la fonction de transmission du courant et sont connectées à un boitier électronique.
Un boitier de commande équipé d'un bouton marche/arrêt, d'un inverseur pour le réglage de la température ainsi que de deux voyants indiquant l'état des différentes fonctions.
Un circuit électronique alimenté en énergie électrique par le véhicule sur lequel viennent se connecter le boitier de commande ainsi que les deux poignées. Ce circuit assure la détection, la protection, l'alimentation ainsi que le réglage de la température. Lorsqu'un utilisateur équipé des gants saisit la poignée, le système détecte la connexion et transmet l'énergie aux éléments chauffants. Par l'intermédiaire du boitier de commande l'utilisateur met en fonction le dispositif et ajuste à la température souhaitée.

Les dessins annexés illustrent l'invention :

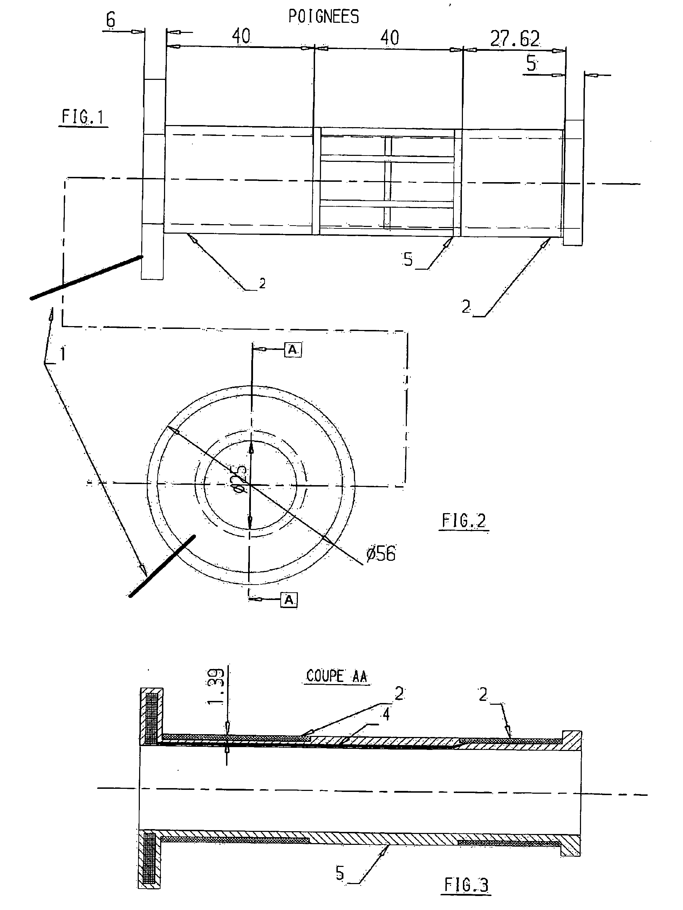

La figure 1 illustre la face des poignées.
La figure 2 illustre le côté des poignées.
La figure 3 illustre la coupe AA des poignées.

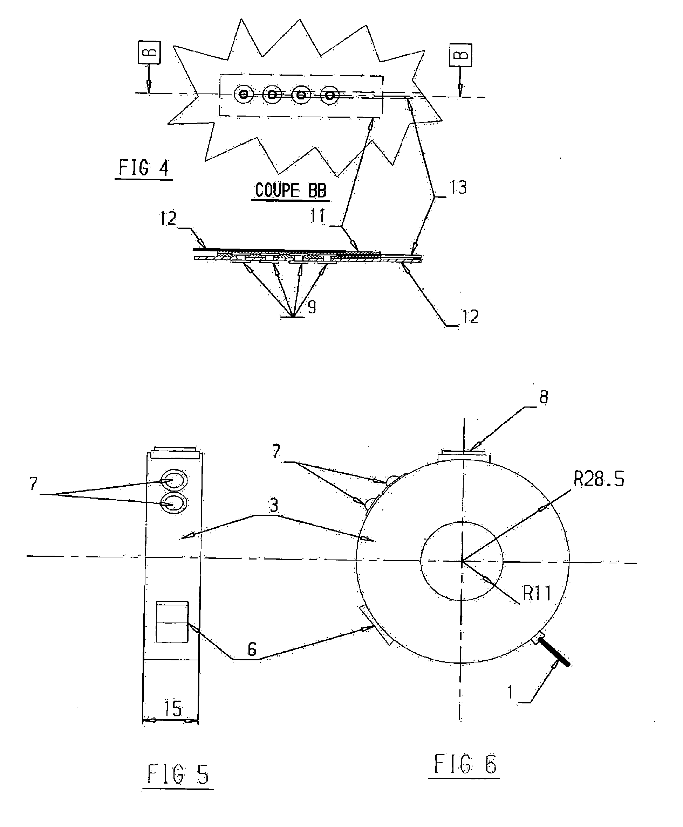

La figure 4 illustre la coupe BB des contacts ainsi qu'une vue agrandie de ces derniers.
La figure 5 illustre le côté du boitier de commande.
La figure 6 illustre la face du boitier de commande.
La figure 7 illustre l'installation du dispositif sur un véhicule porteur.
La figure 8 illustre le diagramme fonctionnel électronique du dispositif.

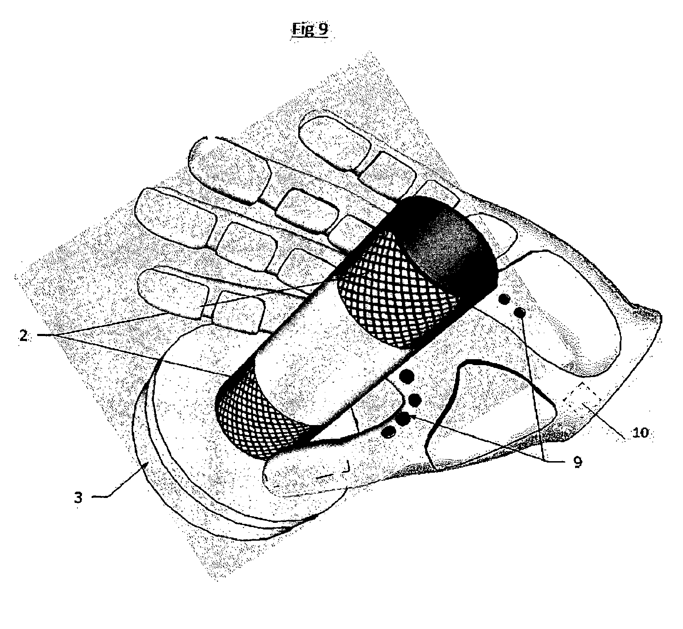

La figure 9 illustre l'emplacement des contacts sur les gants. Cette figure sera utilisée pour accompagner l'abrégé.

En référence à ces dessins, chaque poignée est réalisée suivant le même procédé. Les dimensions telles que reprises sur les figures de 1 à 3 devront être respectées afin qu'elles correspondent à des dimensions standards. Le corps des poignées est réalisé en caoutchouc (5) ou toute autre matière similaire isolante électrique moulée sur lequel viennent se fixer deux bagues en métal inoxydable ou tout autre conducteur électrique (2). Ce corps assure la structure de la poignée et l'isolation électrique entre les deux bagues (2). La liaison électrique entre les bagues (2) et le circuit électronique se fait par deux fils conducteurs isolés (4) noyés dans la masse de la poignée qui débouchent sur le côté intérieur de la poignée (1).

La forme et l'emplacement des ces deux bagues couvrent la majeure partie de préhension des poignées et le fait que chacun des gants soient équipés de plusieurs contacts (9) permet d'assurer la liaison électrique permanente quelque soit la position de la main de l'utilisateur dans les phases de conduite du véhicule. Ces deux bagues de contact (2) sont totalement intégrées aux poignées. Ceci permet le montage sur tout véhicule motorisé à conduite extérieure de façon inamovible évitant ainsi tout risque électrique ou de malveillance.

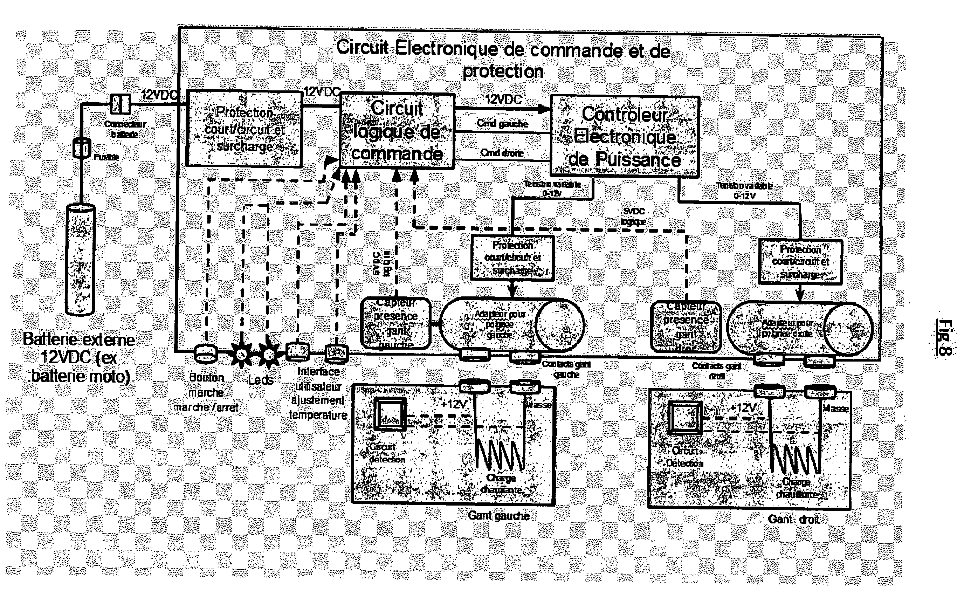

Le circuit électronique qui gère l'ensemble du dispositif présente les spécifications suivantes (Figure 8). Il est intégré dans un boitier étanche qui se fixe au véhicule porteur. Il est alimenté en 12 volts fourni par la batterie du véhicule porteur et fournit la puissance nécessaire au fonctionnement du dispositif électronique ainsi qu'à celui des éléments chauffants. Ce circuit électronique contient une protection active et un fusible à polymères contre les surcharges et/ou un court-circuit. Il dispose également d'un système qui limite la puissance maximale délivrée à chaque poignée. La puissance de chaque poignée est ajustable de 5% à 95% de la puissance maximale. A la mise en fonction du dispositif par l'intermédiaire du bouton (8) la puissance est mémorisée sur la position sélectionnée par l'utilisateur au moyen du l'inverseur (6).

Lorsque le dispositif est mis en fonction, il alimente les bagues (2) sous une tension de 5 volts. Cette tension est utilisée pour détecter la connexion des gants aux poignées.

Lorsque cette connexion est effective, le circuit électronique alimente séparément et uniquement la ou les poignées connectées en courant pour le fonctionnement des éléments chauffants.

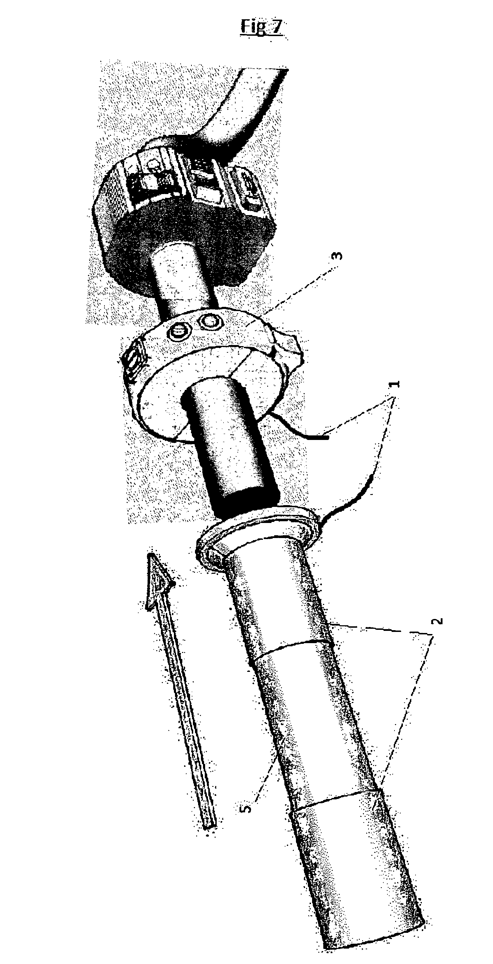

Le boitier de commande (3) permet à l'utilisateur la mise en fonction ou l'arrêt du système par l'intermédiaire du bouton (8), de régler la température souhaitée avec l'inverseur (6) et de visualiser les différents états au travers de deux voyants (7). Ce boitier se monte entre le boitier existant du véhicule et la poignée (Figure 7) et vient se connecter au circuit électronique par le biais des fils (1). Il est équipé d'un dispositif de serrage pour son maintien à la position choisie par l'utilisateur.

Les gants se composent d'une enveloppe externe (12) qui peut être en cuir ou toute autre matière textile adaptée aux besoins de l'utilisateur. Dans la partie de la paume des gants sont fixés des contacts conducteurs électriques (9) traversant l'enveloppe extérieure (12). La forme adaptée évite qu'ils génèrent une gêne pour l'utilisateur. Ces contacts (9) sont disposés de telle sorte que la liaison électrique entre ces derniers et la poignée soit permanente indépendamment de la position de la main et des doigts qui actionnent les leviers de commande du véhicule porteur. Dans la partie intérieure du gant, les contacts (9) sont reliés électriquement par un conducteur (13). Ces deux conducteurs sont connectés au circuit électronique de détection (10) fixé à l'intérieur de chaque gant. Ce dernier est totalement enduit d'une résine de protection. Les éléments chauffants viennent également se connecter à ce circuit électronique. Les contacts (9) et leurs connections électriques sont isolés par un isolant électrique et thermique (11) protégeant ainsi la main de l'utilisateur dans le cas d'une chute. A l'intérieur de l'enveloppe externe (12), une deuxième enveloppe (14) imperméable à l'eau sert à isoler totalement la main de l'utilisateur.

## Revendications

1. Dispositif qui permet par contact, entre poignées et gants, l'alimentation électrique d'équipements chauffants pour utilisateurs de véhicules motorisés à conduite extérieure **caractérisé en ce que** ce dispositif se compose de deux bagues distinctes conductrices (2) intégrées à chacune des deux poignées (3) et de gants munis de plusieurs contacts conducteurs électriques (9) situés sur la face de la paume coté annulaire et coté pouce.

2. Dispositif selon la revendication 1 caractérisé sur le fait que les deux bagues (2) intégrées à chacune des deux poignées couvrent la majeure partie de préhension des poignées et que le fait que chacun des gants soient équipés de plusieurs contacts conducteurs (9) permet d'assurer la liaison électrique permanente quelque soit la position de la main de l'utilisateur dans les phases de conduite du véhicule évitant ainsi le maintien d'une position bien définie de la main.

3. Dispositif selon la revendication 2 caractérisé sur le fait que les deux bagues de contact (2) sont totalement intégrées dans les poignées aux formes et aux dimensions standard. Ceci permet leur montage sur tout véhicule motorisé à conduite extérieure sans aucune modification, de façon inamovible évitant ainsi tout risque lié à l'utilisation d'une source électrique ou de malveillance.

4. Dispositif selon la revendication 3 **caractérisé par** un système électronique de détection, d'alimentation, de régulation et de protection. Les deux bagues (2) montées sur chaque poignée en plus d'assurer la fonction de contact pour le passage du courant, assurent également la fonction de détection par l'intermédiaire du circuit électronique.

5. Dispositif selon la revendication 4 **caractérisé par** un système utilisant les bagues conductrices (2), un circuit électronique de détection (10) implanté dans chaque gant qui permet de déclencher l'alimentation de puissance en énergie électrique des bagues (2) uniquement sur détection et connexion effective des gants.

6. Dispositif caractérisé selon les revendications 1, 2, 3, 4, et 5 en ce que l'ensemble du système permet le transfert et le contrôle d'énergie électrique en sécurité uniquement par contact entre les contacts des poignées (2) et les gants équipés de contacts (9).

## Patentansprüche

1. Gerät, das durch den Kontakt zwischen Griffen und Handschuhen die Stromzufuhr für Heizvorrichtungen ermöglicht und zwar für die Nutzer von Motorfahrzeugen mit externer Steuerung. Kennzeichnend für dieses Gerät ist, dass es aus zwei leitfähigen Ringen besteht (2), die jeweils mit einem der beiden Griffe integriert sind (3) und Handschuhen mit mehreren elektrisch leitenden Kontakten (9), die auf der Seite der Handfläche zum Ringfinger und zum Daumen hin platziert sind.

2. Gerät, das gemäß patentansprüche 1 dadurch charakterisiert ist, dass die beiden Ringe (2) mit jedem der beiden Handgriffe integriert sind und den größeren Teil der Grifffläche der Griffe abdecken und ebenso dadurch, dass jeder der Handschuhe mit mehreren leitfähigen Kontakten (9) ausgestattet ist, was eine permanente elektrische Verbindung unabhängig von der Position der Hand des Benutzers beim Fahren des Fahrzeugs ermöglicht und somit keine starre Position der Hand erfordert.

3. Gerät nach patentansprüche 2, das **dadurch gekennzeichnet** wird, dass beide Kontaktringe (2) vollständig in die Handgriffe integriert sind und zwar mit Standardformen und Standardabmessungen. Dies ermöglicht ohne jede Veränderung die feste Installation auf einem Motorfahrzeug und vermeidet somit das Risiko bei der Verwendung einer Stromquelle oder das Risiko bei Unaufmerksamkeit.

4. Gerät nach patentansprüche 3, das durch ein elektronisches System der Erfassung, Stromversorgung und der Schutzregulierung gekennzeichnet ist. Die beiden Ringe (2) auf jedem Griff dienen zusätzlich zur Gewährleistung der Kontaktfunktion für die Stromleitung (2) auch der Erkennungsfunktion mittels der elektronischen Schaltung.

5. Vorrichtung nach patentansprüche 4, **gekennzeichnet durch** ein System mit leitfähigen Ringen (2), einer elektronischen Detektionsschaltung (10), die in jedem Handschuh implantiert ist, der eine Stromversorgung der Ringe (2) nur nach Erkennung und effektiver Verbindung der Handschuhe auslösen kann.

6. Gerät nach patentansprüche 1, 2, 3, 4 und 5, das **dadurch gekennzeichnet ist, dass** das gesamte System die Übertragung und die Steuerung der elektrischen Leistung sicher ermöglicht, da diese nur bei Kontakt zwischen den Kontakten der Handgriffe (2) und den mit Kontakten ausgestatteten Handschuhen möglich sind.

## Claims

1. Device for contact between handles and gloves, power supply of heating equipment for users of motorized vehicles driven outdoors, characterized regarding this device consist of two separate conductive rings (2) integrated with each of the two handles (3) and gloves with several electrically conductive contacts (9) situated on the palm side, on the thumb and ring finger.

2. Device according to Claim 1 **characterized in that** the two rings (2) integrated with each of the two handles cover most of the handle grips and the fact that each of the gloves are equipped with multiple conductive contacts (9) allows to ensure permanent electrical connection irrespective of the position of the user's hand in the driving phases of the vehicle thus avoiding maintenance of a specified hand position.

3. Device according to Claim 2 **characterized in that** both contact rings (2) are completely integrated into the standard shapes and dimensions of the handles. This allows for immoveable installation on any motorized outdoor vehicle without any modification thus avoiding any risk associated with the use of a power source or carelessness.

4. Device according to Claim 3 **characterized by** an electronic detection system, power supply, control and protection. The two rings (2) mounted on each grip in addition to ensuring the contact function for the passage of the current, also provide the detection function by means of the electronic circuit.

5. Device according to Claim 4, **characterized by** a system using the conductive rings (2), an electronic detection circuit (10) located in each glove which triggers the power supply of electric energy of the rings (2) only on detection and effective connection of the gloves.

6. Device is characterized according to claims 1, 2, 3, 4, and 5 in that the whole system allows the safe transfer and power control solely by contact between the contacts of the handles (2) and the gloves equipped with contacts (9).
